(19) Europäisches Patentamt

European Patent Office

Office européen des brevets

(11) **EP 4 685 515 A1**

(12) **EUROPEAN PATENT APPLICATION**

(43) Date of publication:
28.01.2026 Bulletin 2026/05

(21) Application number: 24210531.0

(22) Date of filing: 04.11.2024

(51) International Patent Classification (IPC):
*G01S 7/35* (2006.01)      *G01S 13/34* (2006.01)
*G01S 13/58* (2006.01)     *G01S 13/931* (2020.01)

(52) Cooperative Patent Classification (CPC):
G01S 13/584; G01S 7/356; G01S 13/343;
G01S 13/931

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.07.2024 US 202418780640

(71) Applicant: Aptiv Technologies AG
8200 Schaffhausen (CH)

(72) Inventors:
• CAO, Qing
  Carmel, IN, 46074 (US)
• FENG, Yi
  Westfield, IN, 46074 (US)
• LI, Ke
  Carmel, IN, 46280 (US)

(74) Representative: Manitz Finsterwald
Patent- und Rechtsanwaltspartnerschaft mbB
Martin-Greif-Straße 1
80336 München (DE)

(54) **RADAR SYSTEMS AND METHODS FOR MIMO MODULATION AND SIGNAL PROCESSING**

(57) Radar systems and methods are provided and include transmitting radar signals with multiple transmit channels using a modulation technique and a frequency shift amount such that radar signals are shifted in frequency from adjacent transmit channels. Received radar signals are processed using first and second signal processing modes. In the first signal processing mode, virtual channel demodulation is performed by matching received radar signals within a radar chirp to a first transmit channel and performing Doppler FFT and range shifting. In the second signal processing mode, virtual channel demodulation is performed by matching received radar signals to a corresponding transmit channel and performing Doppler FFT without range shifting. An optimized data cube is generated based on data cubes from the signal processing modes and based on a strength of a target represented in the data cubes.

**FIG. 6**

**Description**

FIELD

The present disclosure relates to radar systems and methods and, more particularly, to radar systems and methods for MIMO modulation and signal processing.

BACKGROUND

This section provides background information related to the present disclosure which is not necessarily prior art.

Automotive radar sensors are used in vehicle sensing systems to determine information about objects in the environment of the vehicle, such as the range, velocity, and angle information about objects or targets in the environment of the vehicle. The sensed information can, for example, be used by other vehicle systems, such as autonomous driving systems and/or advanced driver assistance systems (ADAS), such as automatic and adaptive cruise control systems, blind spot monitoring systems, etc., to control steering systems, braking systems, throttle systems, driver alert and warning systems, and/or other vehicle systems.

To increase detection performance, additional transmitter and receiver antennas are added in an antenna array to create a multiple-input multiple-output (MIMO) radar systems with more transmit and receive channels that can produce and higher-resolution detection results. The level of correlation for such MIMO radar systems, however, increases as the additional antennas are deployed, leading to a higher noise floor, which can reduce the Doppler dynamic range of the MIMO radar systems. For example, automotive MIMO radar systems can often have cross-channel residue due to the non-orthogonality of the virtual channels of the MIMO radar system. With the increase in the number of antennas, the corresponding increase in the amount of residue can result in a higher noise floor that can potentially shadow weaker targets that are near stronger targets in the Doppler domain.

To mitigate these issues, MIMO radar systems can utilize residue estimation and subtraction (REST) techniques to reduce or remove the residue resulting from the correlation of virtual channels in the MIMO radar systems. Additional details for performing REST are provided in Applicant's commonly assigned patent US 9,952,319, titled "Residue Cancellation for Automated Vehicle MIMO RADAR," issued April 24, 2018, which is incorporated herein by reference in its entirety. The use of REST to reduce or remove residue can add computational complexity and increase the use of computational resources available to the MIMO radar system. Because the computational resources and processing power available to automotive radar systems is limited, excessive computation required for performing REST can reduce the amount of efficient computational resources available to the system and reduce the number of REST range bins that can be processed.

In addition, a number of modulation techniques can be used for MIMO radar systems having multiple orthogonal transmit channels. For example, code-division multiplexing (CDM) can be used wherein multiple data signals are simultaneously transmitted over a common frequency band and each signal is identified by a distinctive spreading code. The Doppler domain dynamic range of MIMO radar systems using CDM, however, can be restricted by decoding residue. As noted above, REST techniques can be used with CDM. A MIMO radar system using CDM-REST processing, however, can require a large amount of computational resources.

For further example, Doppler-division multiplexing (DDM) can also be used wherein a phase shift is applied to separate signals transmitted by different transmit antennas. The Doppler spectrum, however, can be crowded with many transmit channels and an overlap problem with multiple target scenarios can create angle finding challenges MIMO system utilizing DDM can also generate false peaks when the Doppler spectrum is spread.

For further example, MIMO radar systems can utilize a hybrid CDM+DDM technique, which can provide moderate improvement in residue mitigation. Such systems, however, include the above-mentioned drawbacks of both the CDM and DDM techniques.

For further example, MIMO radar systems can utilize time-division multiplexing, wherein independent signals are transmitted and received over a common signal path by means of synchronized switching so that each signal appears only a fraction of the time. MIMO radar systems utilizing TDM, however, can require a longer time for signal processing and data cube generation/sampling.

SUMMARY

This section provides a general summary of the disclosure and is not a comprehensive disclosure of its full scope or all of its features.

A radar system is provided and includes at least one processor and memory configured to transmit radar signals within a plurality of frames, each frame having a plurality of radar chips, and each radar chirp having radar signals transmitted by a plurality of transmit channels ($TX_1$ to $TX_m$) using a modulation technique and a frequency shift amount such that a frequency of the radar signals transmitted by each transmit channel is shifted by the frequency shift amount from each adjacent transmit channel. The processor and memory are further configured to receive the transmitted radar signals within the plurality of frames after the transmitted radar signals are reflected from at least one target. The processor and memory are further configured to process the received radar signals using a first signal processing mode for at least one frame of the plurality of frames and a second signal processing mode for at least one frame of the plurality of frames, the first signal processing mode and the second signal processing mode each including performing range fast Fourier transform (FFT) processing, the first signal processing mode including performing virtual channel demodulation by matching all received radar signals within a radar chirp to $TX_1$ and performing Doppler FFT and range shifting, and the second signal processing mode including performing virtual channel demodulation by matching the received radar signals with the radar chirp to a corresponding one of the plurality of transmit channels ($TX_1$ to $TX_m$) and performing Doppler FFT without range shifting. The processor and memory are further configured to generate a first data cube based on radar signals processed using the first signal processing mode and a second data cube based on radar signals processed using the second signal processing mode. The processor and memory are further configured to generate an optimized data cube based on the first data cube and the second data cube and based on a strength of the at least one target represented in the first data cube and the second data cube. The processor and memory are further configured to determine at least one of a velocity estimate, a range estimate, or an angle estimate of the at least one target based on the optimized data cube.

In other features, the at least one processor and memory are further configured to process the received radar signals using the first signal processing mode and the second signal processing mode by repeatedly using an alternating processing pattern that includes processing at least one first frame of the plurality of frames using the first signal processing mode followed by processing at least one subsequent frame of the plurality of frames using the second signal processing mode.

In other features, the at least one processor and memory are further configured to determine the strength of the at least one target based on a power of received radar signals associated with the at least one target and based on a mean power of the radar signals transmitted by the plurality of transmit channels.

In other features, the at least one processor and memory are further configured to use data values from the first data cube in response to the strength of the at least one target being such that the power of the received signals associated with the at least one target is greater than the mean power.

In other features, the at least one processor and memory are further configured to use data values from the second data cube in response to the strength of the at least one target being such that the power of the received signals associated with the at least one target is less than the mean power.

In other features, the at least one processor and memory are further configured to use data values from the first data cube in response to the strength of the at least one target being such that the power of the received signals is less than a predetermined threshold.

In other features, the modulation technique includes code-division multiplexing (CDM).

In other features, the modulation technique includes Doppler-division multiplexing (DDM).

In other features, the modulation technique includes a hybrid of both code-divisional multiplexing (CDM) and Doppler-division multiplexing (DDM).

In other features, the radar system is installed in a vehicle having at least one vehicle system, the at least one processor and memory are configured to communicate at least one of the velocity estimate, the range estimate or the angle estimate to the at least one vehicle system, and the at least one vehicle system is configured to control at least one of a steering system, a braking system, a throttle system, or a driver alert and warning system based on the estimate of the range and the velocity of the target.

A method is also provided an includes transmitting, with a plurality of transmit channels ($TX_1$ to $TX_m$) of a radar system, radar signals within a plurality of frames, each frame having a plurality of radar chips having radar signals transmitted by the plurality of transmit channels ($TX_1$ to $TX_m$) using a modulation technique and a frequency shift amount such that a frequency of the radar signals transmitted by each transmit channel is shifted by the frequency shift amount from each adjacent transmit channel. The method further includes receiving, with at least one receive channel of the radar system, the transmitted radar signals within the plurality of frames after the transmitted radar signals are reflected from at least one target. The method further includes processing, with at least one processor of the radar system, the received radar signals using a first signal processing mode for at least one frame of the plurality of frames and a second signal processing mode for at least one frame of the plurality of frames, the first signal processing mode and the second signal processing mode each including performing range fast Fourier transform (FFT) processing, the first signal processing mode including performing virtual channel demodulation by matching all received radar signals within a radar chirp to $TX_1$ and performing Doppler FFT and range shifting, and the second signal processing mode including performing virtual channel demodulation by matching the received radar signals with the radar chirp to a corresponding one of the plurality of transmit channels ($TX_1$ to $TX_m$) and performing Doppler FFT without range shifting. The method further includes generating, with the at least one processor, a first data cube based on radar signals processed using the first signal processing mode and a second data cube based on radar signals processed using the second signal processing mode.

The method further includes generating, with the at least one processor, an optimized data cube based on the first data cube and the second data cube and based on a strength of the at least one target represented in the first data cube and the second data cube. The method further includes determining, with the at least one processor, at least one of a velocity estimate, a range estimate, or an angle estimate of the at least one target based on the optimized data cube.

In other features, processing the received radar signals using the first signal processing mode and the second signal processing mode includes repeatedly using an alternating processing pattern that includes processing at least one first frame of the plurality of frames using the first signal processing mode followed by processing at least one subsequent frame of the plurality of frames using the second signal processing mode.

In other features, the method further includes determining, with the at least one processor, the strength of the at least one target based on a power of received radar signals associated with the at least one target and based on a mean power of the radar signals transmitted by the plurality of transmit channels.

In other features, generating the optimized data cube includes using data values from the first data cube in response to the strength of the at least one target being such that the power of the received signals associated with the at least one target is greater than the mean power.

In other features, generating the optimized data cube includes using data values from the second data cube in response to the strength of the at least one target being such that the power of the received signals associated with the at least one target is less than the mean power.

In other features, generating the optimized data cube includes using data values from the first data cube in response to the strength of the at least one target being such that the power of the received signals is less than a predetermined threshold.

In other features, the modulation technique includes code-division multiplexing (CDM).

In other features, the modulation technique includes Doppler-division multiplexing (DDM).

In other features, the modulation technique includes a hybrid of both code-divisional multiplexing (CDM) and Doppler-division multiplexing (DDM).

In other features, the radar system is installed in a vehicle having at least one vehicle system, the at least one processor and memory are configured to communicate at least one of the velocity estimate, the range estimate or the angle estimate to the at least one vehicle system, and the at least one vehicle system is configured to control at least one of a steering system, a braking system, a throttle system, or a driver alert and warning system based on the estimate of the range and the velocity of the target.

Further areas of applicability will become apparent from the description provided herein. The description and specific examples in this summary are intended for purposes of illustration only and are not intended to limit the scope of the present disclosure.

DRAWINGS

The drawings described herein are for illustrative purposes only of selected embodiments, not all possible implementations, and are not intended to limit the scope of the present disclosure.

FIG. 1 is a block diagram of a vehicle having a radar system in accordance with the present disclosure.
FIG. 2 is another block diagram of a vehicle having a radar system in accordance with the present disclosure.
FIG. 3 is a graph illustrating frequency shifted radar signals of a radar chirp in accordance with the present disclosure.
FIG. 4 is a graph illustrating multiple radar chirps of a frame in accordance with the present disclosure.
FIG. 5 is an illustration of range profile graphs using different signal processing modes in accordance with the present disclosure.
FIG. 6 is a flow diagram of signal processing of received radar signals in accordance with the present disclosure.
FIG. 7 is a graph illustrating mean power and target power for determining a strength of a target in accordance with the present disclosure.
FIG. 8 is an illustration of Doppler profile graphs using different signal processing modes in accordance with the present disclosure.
FIG. 9 is an illustration of range profile graphs using different signal processing modes and an optimized range profile graph in accordance with the present disclosure.

Corresponding reference numerals indicate corresponding parts throughout the several views of the drawings.

DETAILED DESCRIPTION

Example embodiments will now be described more fully with reference to the accompanying drawings.

The present disclosure provides systems and methods that improve the Doppler dynamic range of MIMO radar systems for weak target detection by utilizing frequency shifting in conjunction with code-division multiplexing (CDM), as discussed in further detail below. The systems and methods of the present disclosure beneficially use CDM to allow for the orthogonal modulation of many transmit channels, while improving the Doppler dynamic range through frequency shifting, without requiring computationally expensive REST processing. In this way, the use of frequency-shifting CDM, or FS-CDM, can provide optimized detection and increased Doppler dynamic range for MIMO radar systems with computationally less expensive signal processing.

While example MIMO radar system embodiments are discussed utilizing FS-CDM, the frequency shifting methods of the present disclosure can also be utilized with other modulation techniques such as DDM and hybrid CDM+DDM techniques. In this way, the teachings of the present disclosure can equally apply to frequency-shifting DDM (FS-DDM) and frequency-shifting hybrid CDM+DDM (FS-hybrid CDM+DDM) MIMO radar systems and methods.

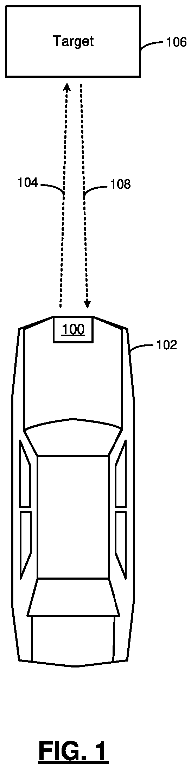

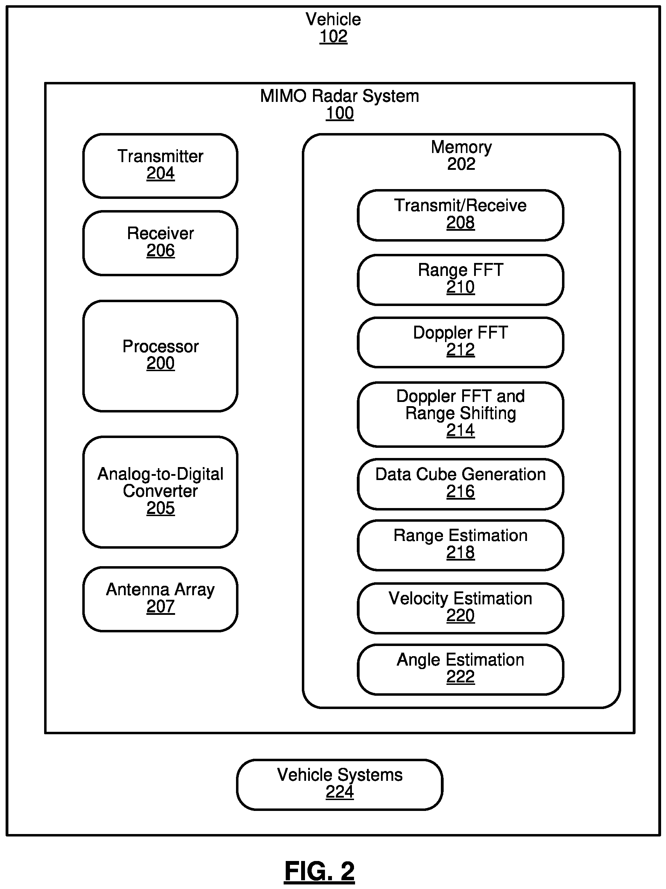

With reference to FIGS. 1 and 2, a MIMO radar system 100 of a vehicle 102 in accordance with the present disclosure is shown. The radar system 100 transmits signals 104 that are reflected off of an object or target 106 in the environment of the vehicle 102. While a single target 106 is shown for purposes of illustration in FIG. 1, in practice the target 106 can comprise multiple objects. The radar system 100 receives signals 108 that are reflected from the target 106. Based on characteristics of the received signals 108, the radar system 100 determines information about the target 106, such as the range, velocity, and angle of the object, which can subsequently be used to determine other information about the target 106, such the target's location, size, orientation, velocity, acceleration, etc. While the example of FIG. 1 shows the location of the radar system 100 as a front radar located at the front of the vehicle, it is understood that the systems and methods of the present disclosure can also be used with radar systems located at other positions on the vehicle, such as corner radar systems, side radar systems, rear radar systems, etc.

The radar system 100 includes a processor 200 and memory 202 that stores code executed by the processor 200 to perform the required functionality for transmitting, receiving, and processing signals 104, 108 and determining the information about the target 106, such as range, velocity, and angle, based on the characteristics of the received signals 108. While the example implementation illustrates a single processor 200, multiple processors and/or processing modules working together can alternatively be used. The radar system 100 includes a transmitter 204 that transmits the signals 104 and a receiver 206 that receives the signals 108 using an antenna array 207. The antenna array 207 includes one or more transmit (TX) antennas and one or more receive (RX) antennas for transmitting and receiving signals 104, 108. The processor 200, for example, executes transmit/receive code 208 stored in the memory 202 to control the transmitter 204 and receiver 206 to transmit and receive the signals 104, 108 using the antenna array 207, as discussed in further detail below. The memory 202 also stores code 210 used by the processor 200 to perform a first-domain range fast Fourier transform (FFT), code 212 to perform a second-domain Doppler FFT on received radar signals 108, and code 214 to perform a second-domain Doppler FFT with range shifting, as discussed in further detail below. For example, the processor 200 performs range FFT using the range FFT code 210 to generate a range index. The processor 200 performs Doppler FFT using the Doppler FFT code 212 to generate a first Doppler index and performs Doppler FFT and range shifting using code 214 to generate a second Doppler index, as discussed in further detail below. The processor 200 then performs data cube generation using the data cube generation code 216. For example, as discussed in further detail below, the processor 200 generates a first data cube based on the processing results of the range FFT and the Doppler FFT, a second data cube based on the processing results of the range FFT and the Doppler FFT and rang shifting, and an optimized data cube based on the first data cube and the second data cube. The processor 200 then uses range estimation code 218, velocity estimation code 220, and angle estimation code 222 to process the optimized data cube to determine the range, velocity, and angle of the target 106, in accordance with the present disclosure.

The processor 200 can communicate the determined information about the target 106, such as the range, velocity, and angle, of the target 106 to additional vehicle systems 224. The additional vehicle systems 224 can include, for example, autonomous driving systems and/or advanced driver assistance systems (ADAS), such as automatic cruise control systems, blind spot monitoring systems, etc. The additional vehicle systems 224 can then utilize and process the information about the target 106 to appropriately control steering systems, braking systems, throttle systems, driver alert and warning systems, and/or other systems of the vehicle 102 based on the information about the target 106.

The radar system 100 also includes an analog-to-digital converter (ADC) 205 used to sample the received radar signals 108 using a specified sample rate and to convert analog information about the received radar signals, such as a receive frequency, to a digital format. The ADC 205 can be implemented using a separate processor, multiple processors, and/or a separate module configured to perform analog-to-digital radar signal processing in accordance with the present disclosure.

### FS-CDM Waveform Modulation

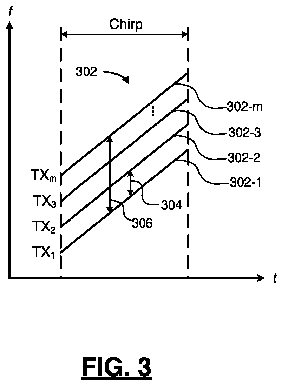

With reference to FIG. 3, a graph illustrating a number of radar signals 302 transmitted by $m$ transmit (TX) channels of MIMO radar system 100 during a single chirp for each TX channel is shown. The processor 200 controls the transmitter 204 to transmit the radar signals 302 using the antenna array 207, as described below. The MIMO radar system 100 can include any number m of TX channels, with m being an integer greater than one. In particular, the graph includes radar signals 302 transmitted by transmit channels $TX_1$ to $TX_m$ using a frequency-modulated continuous-wave (FMCW) form. In the graph of FIG. 3, time is shown on the horizontal axis while the frequency of the radar signals 302 is shown in the vertical axis. As shown in FIG. 3, the frequency of each radar signal 302 increases during the chirp. For example, each radar signal 302 of the chirp has an initial frequency and then increases over the course of the chirp to a higher end frequency, resulting in an up-chirp having a frequency that increases over the time period of the chirp. While an up-chirp is illustrated in FIG. 3, the frequency of each radar signal 302 can alternatively decrease during the chirp. For example, each radar signal 302 can instead have an initial frequency and then decrease over the course of the chirp to a lower end frequency, resulting in a down-chirp having a frequency that decreases over the time period of the chirp.

As further illustrated in FIG. 3, the radar signals 302 are shifted in frequency by a frequency shift amount $f_{shift}$ 304. For example, radar signal 302-1 transmitted by channel $TX_1$, as the first radar signal, is not shifted. As shown in FIG. 3, the frequency shift amount $f_{shift}$ between any two adjacent TX channels is much less than the full frequency bandwidth of the chirp. For example, each chirp starts at a starting transmit frequency and ends at an ending transmit frequency such that the full frequency bandwidth of the chirp can be calculated as the difference between the starting and ending transmit frequencies of the chirp. The frequency shift amount $f_{shift}$ is less than full frequency bandwidth of the chirp, such as five percent, ten percent, fifteen percent, etc., of the full frequency bandwidth. While specific percentages are provided as examples, any particular percentage can be used. Radar signal 302-2 transmitted by $TX_2$ is shifted upward in frequency from radar signal 302-1 by $f_{shift}$ 304. Radar signal 302-3 transmitted by $TX_3$ is shifted upward in frequency from radar signal 302-2 by $f_{shift}$ 304 and from radar signal 302-1 by $2 \times f_{shift}$ 304. Radar signal 302-m transmitted by $TX_m$ is shifted upward in frequency from radar signal 302-1 by a frequency shift amount $f_m$ 306, calculated as $(m-1) \times f_{shift}$. In this way, each pair of adjacent transmit channels are shifted in frequency by the predetermined frequency shift amount $f_m$ 306. Alternatively, while the example of FIG. 3 illustrates a constant frequency shift amount $f_{shift}$ for all pairs of TX channels, a different frequency shift amount $f_{shift}$ can be used for different pairs of TX channels in accordance with the present disclosure. In addition, while the frequency shift amount or amounts can be predetermined, the frequency shift amount or amounts can be arbitrarily determined during operation of the radar system 100 in accordance with the present disclosure.

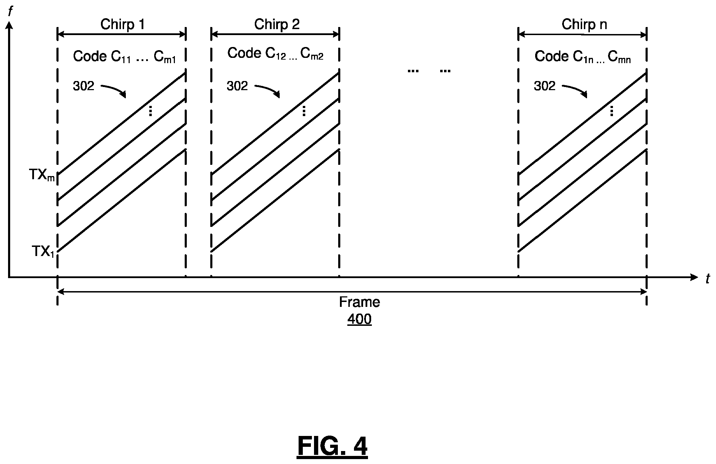

With additional reference to FIG. 4, a graph illustrates a frame 400 having $n$ chirps with radar signals transmitted by the m TX channels. Similar to FIG. 3, in FIG. 4 time is shown on the horizontal axis while frequency is shown in the vertical axis. The processor 200 controls the transmitter 204 to transmit the radar signals 302 using the antenna array 207, as described below. During each of chirps 1 to $n$, each of the transmit channels $TX_1$ to $TX_m$ transmits a radar signal 302 according to the frequency shifting technique using the constant frequency shift amount $f_{shift}$ 304, described above with reference to FIG. 3. In addition, the processor 200 controls the transmitter 204 to apply code-division multiplexing (CDM) to the transmitted radar signals during each of the chirps for each of the transmit channels. As shown in FIG. 4, each of the $n$ chirps has a corresponding CDM code series to be applied to the radar signals transmitted by the $m$ TX channels during that chirp. The $\eta$ CDM code series are stored in memory 202 and used by the processor 200 while executing the transmit/receive code 208 to apply CDM to the radar signals 302 of each chirp during the frame 400. For example, for chirp 1, the code series includes codes $C_{11}$ to $C_{m1}$, with the first subscript number of the code $C$ referring to the corresponding TX channel of the code and the second subscript number of the code C referring to the corresponding chirp. In other words, during chirp 1, code $C_{11}$ is applied to the radar signal 302 transmitted by the $TX_1$ channel and code $C_{m1}$ is applied to the radar signal 302 transmitted by the $TX_m$ channel, etc. Similarly, during chirp 2, code $C_{12}$ is applied to the radar signal 302 transmitted by the $TX_1$ channel and code $C_{m2}$ is applied to the radar signal 302 transmitted by the $TX_m$ channel, etc. During chirp $n$, code $C_{1n}$ is applied to the radar signal 302 transmitted by the $TX_1$ channel and code $C_{mn}$ is applied to the radar signal 302 transmitted by the $TX_m$ channel, etc. In this way, the MIMO radar system 100 transmits radar signals 302 across the $n$ chirps with the $m$ TX channels using a waveform modulation technique utilizing both frequency-shifting and code-division multiplexing, i.e., FS-CDM. The FS-CDM waveform modulation technique can be applied to any suitable waveforms, such as conventional waveforms, including both up and down conventional waveforms, stepped-frequency waveforms (SFW), including both up and down SFW, and any other suitable radar waveforms. In addition, as mentioned above, while the current example embodiment uses CDM in the FS-CDM waveform modulation technique, the present teachings also apply to using frequency shifting with DDM, i.e., FS-DDM, and to hybrid CDM+DDM, i.e., (FS-hybrid CDM+DDM).

As discussed in further detail below, the MIMO radar system 100 receives reflected radar signals returned after reflecting off of a target 106 using k receiver (RX) channels and processes the received signals using two signal processing modes. In a first receive mode, referred to as a FS-CDM signal processing mode, all of the received signals during each chirp are matched with the $TX_1$ channel. In this way, the beat frequencies for different TX channels have known shifts, resulting in the target's range shifting in the range FFT results. In a second receive mode, referred to as a CDM (or legacy) signal processing mode, each of the received signals are matched with the corresponding TX channel of the transmit channels $TX_1$ to $TX_m$. The processing of the received return signals is discussed in further detail below.

*Signal Model*

The signal model used by the MIMO radar system 100 of the present disclosure utilizes the following parameters and variables:

$c_{m,n}$    slow-time phase code sample for transmitter $m$ and chirp $n$;

$f_d$    target normalized Doppler frequency;

$f_m$    shifting frequency for $TX_m$; $TX_1$ has zero frequency shift, i.e., $f_1 = 0$;

$a_{m,n}[l]$    range FFT profile for $TX_m$, chirp n, given range bin $l$; the impact of shifting frequency would be related to shifting range bin $\Delta l_{m,m^*}$ in range FFT profile, i.e., $a_{m,n} \sim a_{m^*,n}[\Delta l_{m,m^*}]$;

$\phi_m$    target transmitter phase shift from array for transmitter $m$;

$\Psi_k$    target receiver phase shift from array for receive channel $RX_k$;

$r_{k,n}$    post range compression data recorded on receive channel $RX_k$ for chirp $n$; $r_{k,n}$ is calculated based on the following Equation 1:

$$r_{k,n} = e^{j\psi_k} \sum_{m=1}^{M} a_{m,n} c_{m,n} e^{j\phi_m} e^{j2\pi f_d n} \quad \text{(Equation 1)}$$

$\tilde{r}_{k,m,n}$    receive data from receive channel $RX_k$ after demodulation for transmit channel $TX_m$, chirp $n$ using the first mode, i.e., FS-CDM signal processing mode; focusing on a particular TX channel of interest, designated by $m^*$, i.e., $TX_{m^*}$, $\tilde{r}_{k,m^*,n}$ is calculated based on the following Equation 2:

$$\tilde{r}_{k,m^*,n} = a_{m^*,n} e^{j\psi_k} e^{j\phi_{m^*}} e^{j2\pi f_d n} + e^{j\psi_k} \sum_{\substack{m=1 \\ m \neq m^*}}^{M} c_{m^*,n} * c_{m,n} a_{m,n} e^{\phi_m} e^{j2\pi f_d n}$$

$$\text{(Equation 2)}$$

where the range profiles, i.e., $a_{m^*,n}$ and $a_{m,n}$ are statistically different for different TX channels due to the frequency shift.

$\tilde{s}_{k,m,n}$    receive data from receive channel $RX_k$ after demodulation for transmit channel $TX_m$, chirp $n$ using the second mode, i.e., CDM (or legacy) signal processing mode; focusing on a particular TX channel of interest, designated by $m^*$, i.e., $TX_{m^*}$, $\tilde{s}_{k,m^*,n}$ is calculated based on the following Equation 3:

$$\tilde{s}_{k,m^*,n} = a_{m^*,n} e^{j\psi_k} e^{j\phi_{m^*}} e^{j2\pi f_d n} + e^{j\psi_k} \sum_{\substack{m=1 \\ m \neq m^*}}^{M} c_{m^*,n} * c_{m,n} a_{m,n} e^{\phi_m} e^{j2\pi f_d n}$$

$$\text{(Equation 3)}$$

where the range profiles, i.e., $a_{m^*,n}$ and $a_{m,n}$ are statistically the same for different TX channels.

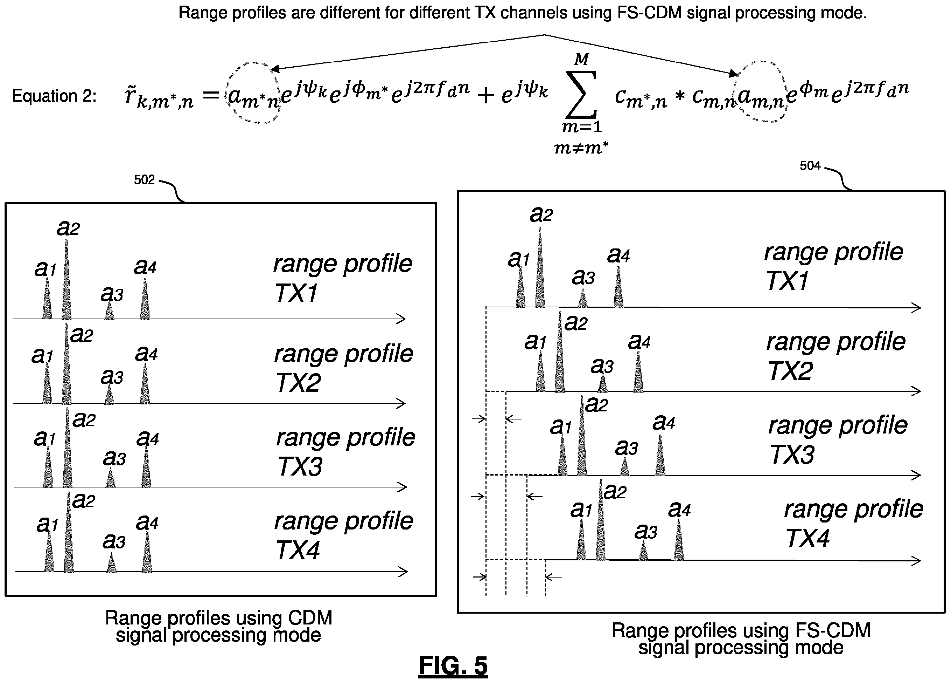

With reference to FIG. 5, graphs illustrating the impact of frequency shifting on the range FFT profiles using the FS-CDM signal processing mode and the CDM signal processing mode are illustrated. In the graphs 502, 504 of FIG. 5, four targets a1 to a4 are represented with range/distance shown on the horizontal axis and target power shown on the vertical axis. For example, graph 502 illustrates range profiles of four targets a1 to a4 for transmit channels $TX_1$ to $TX_4$ using the CDM signal processing mode. As shown in graph 502, targets a1 to a4 have the same power at their range bins. Graph 504 illustrates range profiles of the four targets a1 to a4 for transmit channels $TX_1$ to $TX_4$ using the FS-CDM signal processing mode. As shown in graph 504, the frequency shifting of the transmitted radar signals described above causes range shifting in the FS-CDM range profiles based on the FS-CDM signal processing mode. Further, in graph 504, targets a2 and a4 appear to dominate the total power at their range bins. In this example, the residue resulting from the FS-CDM signal processing mode is much lower than the residue resulting from the CDM signal processing mode.

As further shown in FIG. 5, Equation 2 for the FS-CDM signal processing mode is illustrated. As noted above, the circled $a_{m^*,n}$ and $a_{m,n}$ terms in Equation 2 are statistically different for different TX channels due to the frequency shift in the FS-CDM signal processing mode.

*Signal Processing*

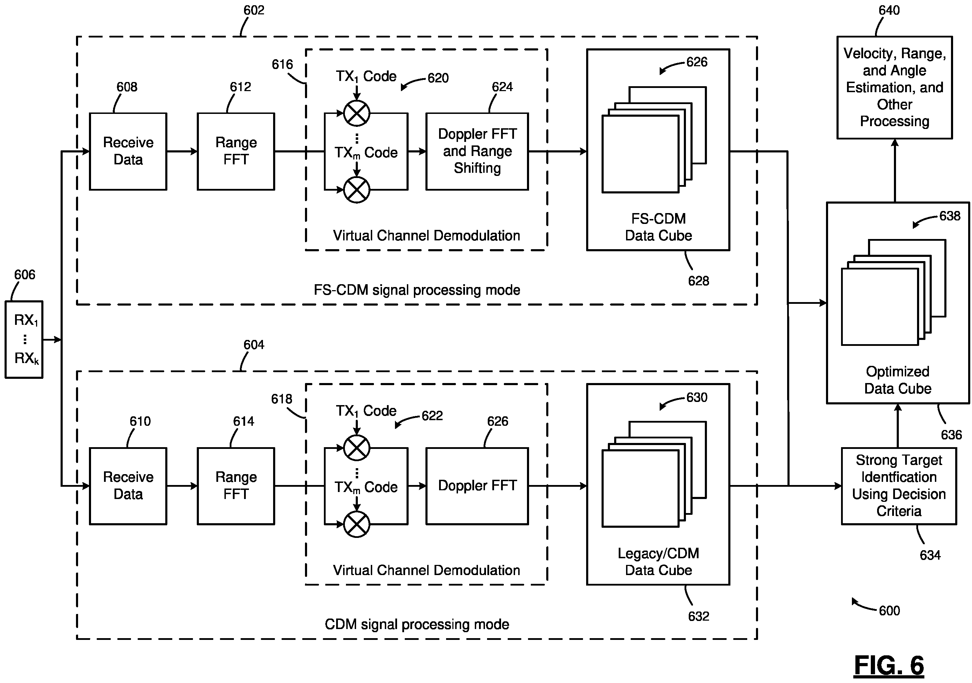

With reference to FIG. 6, a signal processing flow diagram 600 is shown. The signal processing shown in FIG. 6 can, for example, be performed by the processor 200 executing the code stored in memory 202, such as the transmit/receive code 208, the range FFT code 210, the Doppler FFT code 212, the Doppler FFT and Range Shifting code 214, the Data Cube Generation code 216, the range estimation code 218, the velocity estimation code 220, and the angle estimation code 222.

As shown in FIG. 6, the signal processing flow diagram includes a first signal processing branch 602 corresponding to the FS-CDM signal processing mode and a second signal processing branch 604 corresponding to the CDM signal processing mode.

Each of the two signal processing branches 602, 604 begins with receiving a frame of radar signal data based on received signals 108 reflected from a target 106 from the receive channels 606 of the MIMO radar system 100 at 608 and 610. As shown in FIG. 6, the receive channels 606 include $k$ receive channels $RX_1$ to $RX_k$. In one example, the processor 200 can alternate between the FS-CDM signal processing mode and the CDM signal processing mode on a frame-by-frame basis. For example, the processor 200 can process a frame of received data from the RX channels 606 using the FS-CDM signal processing mode in the first processing branch 602 and then process the next consecutive frame of received data from the RX channels 606 using the CDM signal processing mode in the second processing branch 604, and then return to the FS-CDM signal processing mode in the first processing branch 602 for a next consecutive frame, and so on. In this way, the processor can alternate between the two signal processing modes with every other frame. While an example is provided of alternating on a frame-by-frame basis, any other pattern of switching between the two signal processing modes can be used. For example, the processor 200 can process two frames of data, or any other number of frames of data, using one of the signal processing modes and then the next two frames, or any other number of frames of data, using the other signal processing mode. In this way, any switching pattern can be used by the processor 200 for switching between the two signal processing modes. Further, while examples are provided of processing equal numbers of frames using each signal processing mode, the processor 200 can alternatively process unequal numbers of frames between the two signal processing modes. For example, the processor 200 can execute a pattern where a first number of frames are processed using one of the signal processing modes and a second number of frames are then processed using the other of the signal processing modes, with the first number of frames being different from the second number of frames.

In each of the two signal processing branches 602, 604, after receiving a frame of data at 608, 610, the processor 200 then performs range FFT on the frame of received radar signal data at 612 and 614. The processor 200 can execute the range FFT code 210 stored in the memory 202 to perform the range FFT at 612 and 614. In each case, the result of the range FFT 612 includes range bins for the frame of received radar data being processed.

In each of the two signal processing branches 602, 604, after performing range FFT at 612 and 614, the processor 200 then proceeds to perform virtual channel demodulation at 616 and 618. In the first signal processing branch 602 for the FS-CDM signal processing mode, virtual channel demodulation includes performing Doppler FFT and range shifting at 624 based on the CDM codes 620 that were initially used by the TX channels of the MIMO radar system 100 to transmit the chirps of each frame being processed. As discussed above with reference to FIG. 4, the frame 400 includes $n$ chirps and the processor references the applicable CDM codes for each of the $n$ chirps for the $m$ TX channels to perform the virtual channel demodulation of the received signals. The processor 200 can execute the Doppler FFT and range shifting code 214 stored in the memory 202 to perform the Doppler FFT and range shifting at 624. As discussed above, in the FS-CDM signal processing mode, all of the received signals during each chirp are matched with the $TX_1$ channel, as discussed above. In this way, the beat frequencies for different TX channels have known shifts, resulting in the target's range shifting in the range FFT results.

In the second signal processing branch 604 for the CDM signal processing mode, virtual channel demodulation includes performing Doppler FFT, without range shifting, at 626 based on the CDM codes 620 that were initially used by the TX channels of the MIMO radar system 100 to transmit the chirps of each frame being processed. As discussed above with reference to FIG. 4, the frame 400 includes n chirps and the processor references the applicable CDM codes for each of the n chirps for the $m$ TX channels to perform the virtual channel demodulation of the received signals. The processor 200 can execute the Doppler FFT code 212 stored in the memory 202 to perform the Doppler FFT at 626. As discussed above, in the CDM or legacy signal processing mode, the received signals are matched with the corresponding TX channel of the transmit channels $TX_1$ to $TX_m$ without performing range shifting, as discussed above.

In the FS-CDM signal processing mode, after performing virtual channel demodulation at 616, the processor 200 proceeds to 628 and generates an FS-CDM data cube 626 based on the results of the range FFT performed at 612 and the results of the Doppler FFT and range shifting performed at 624. The FS-CDM data cube 626 represents the processed data in the FS-CDM signal processing mode in three dimensions corresponding to range data and Doppler data indexed for each channel. In the CDM signal processing mode, after performing virtual channel demodulation at 618, the processor 200 proceeds to 632 and generates a legacy/CDM data cube 632 based on the results of the range FFT performed at 614 and the results of the Doppler FFT performed at 626. The CDM data cube 626 represents the processed data in the CDM signal processing mode in three dimensions corresponding to range data and Doppler data indexed for each channel. The processor 200 can execute the data cube generation code 216 stored in the memory 202 to generate the FS-CDM data cube 626 and the legacy/CDM data cube 630 at 628 and 632.

At 634 and 636, the processor 200 generates an optimized data cube 638 based on the FS-CDM data cube 626 and the legacy/DCM data cube 630. The processor 200 can execute the data cube generation code 216 stored in the memory 202 to perform the strong target identification using decision criteria at 634 and to generate the optimized data cube 638 at 638.

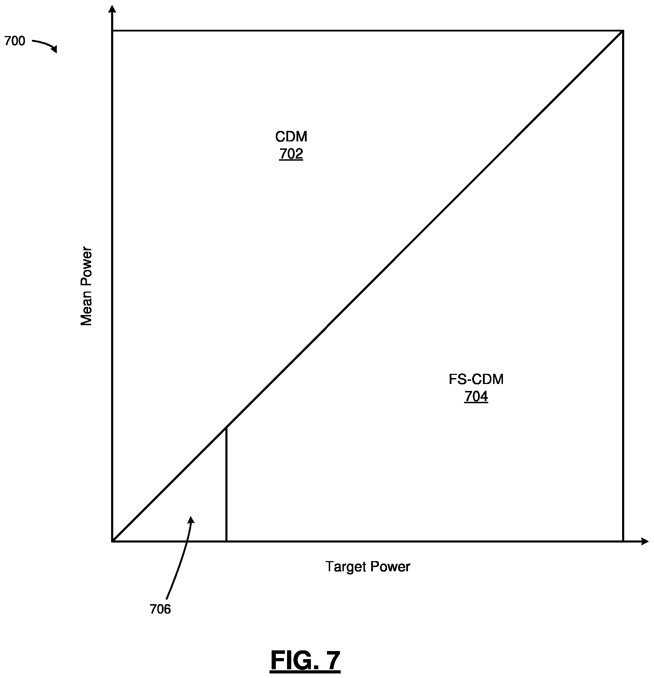

At 634, the processor 200 analyzes the range bins in each of the FS-CDM and legacy/CDM data cubes 626, 630 and determines whether the targets identified in each bin is a relatively strong target based on the associated power of received signals after performing virtual channel demodulation 616, 618 in comparison to the received mean power of virtual/orthogonal channels if range shifting were not performed in the virtual channel demodulation 616 of the FS-CDM signal processing mode of the first processing branch 602. FIG. 7 illustrates a graph 700 with target power of received signals represented along the horizontal axis and mean power of received signals associated with orthogonal TX channels represented along the vertical axis. For a particular target, if the target power of the received signals associated with the target is less than the mean power of received signals without range shifting for the virtual channel demodulation 616 performed in the FS-CDM signal processing mode, then the target would fall with the area represented in the upper portion of the graph designated at 702 and corresponding to CDM. When a particular target falls within area 702, the target is considered a weak target and the processor 200 inserts corresponding entries from the legacy/CDM data cube 630 into the optimized data cube 638 for the target. In addition, when the target falls within area 704, the target power is greater than the mean power and the target is considered a relatively strong target. In this case, the processor 200 inserts corresponding entries from FS-CDM data cube 626 into the optimized data cube 638 for the target. Further, when the target falls within area 706, the target power is low such that the residue can be ignored. In this case, the processor 200 inserts corresponding entries from the legacy/CDM data cube 630 into the optimized data cube 638 for the target. In this way, at 634 and 636 the processor 200 generates an optimized data cube by selecting particular entries from the FS-CDM data cube 626 and the legacy/CDM data cube 630 according to whether the target corresponding to each entry is identified as a weak or strong target based on the target power and mean power.

The use of FS-CDM signal processing with relatively weak targets can result in errors and aliasing that results in additional false targets being identified. To address this, in the case of a relatively weak targets, CDM signal processing mode is used. For relatively stronger targets, however, the aliasing and false target identification are not an issue. As such, FS-CDM signal processing can be used to gain the benefits of reduced residue and increased Doppler dynamic range. In other words, when the target at a range bin is not too weak, CDM residue cannot be ignored and FS-CDM signal processing is used. Further, when the target at a range bin is stronger than the mean power of FS-CDM orthogonal channels, FS-CDM signal processing is used.

At 640, the processor 200 performs velocity, range, and angle estimations, and other applicable radar processing, for identified targets based on the optimized data cube 638 generated at 636. For example, the processor 200 can execute the range estimation code 218 to generate a range estimate for each target, the velocity estimation code 220 to generate a velocity estimate for each target, and the angle estimation code 222 to generate an angle estimate for each target. Other radar processing performed at 640 can include other various threshold comparisons and noncoherent integration processing.

Based on the velocity, range, and angle estimations for identified targets within an environment of the vehicle 102, the additional vehicles systems 224 can perform appropriately control steering systems, braking systems, throttle systems, driver alert and warning systems, and/or other systems of the vehicle 102 based on the information about the targets. As noted above, the additional vehicle systems 224 can include, for example, autonomous driving systems and/or advanced driver assistance systems (ADAS), such as automatic cruise control systems, blind spot monitoring systems, etc.

In this way, the systems and methods of the present disclosure utilizing the two different signal processing modes, i.e., the FS-CDM signal processing mode and the CDM signal processing mode illustrated and discussed with reference to FIG. 6, to generate an optimized data cube 638. As compared with prior systems and methods, the optimized data cube 638 generated in this manner provides improved the Doppler dynamic range (DDR) and decreased residue for the MIMO radar system 100, as compared with prior systems and methods that only use a single signal processing mode, such as the CDM signal processing mode. In particular, the systems and methods of the present disclosure uses CDM signal processing with relatively weak targets to avoid any potential errors due to aliasing that could result in the identification of false targets and uses FS-CDM signal processing for relatively stronger targets where aliasing and false target identification are not an issue in order to gain the benefits of reduced residue and increased Doppler dynamic range that result from the use of FS-CDM signal processing. In this way, the use of FS-CDM signal processing improves the Doppler dynamic range when the target power in a specific range profile is stronger than the mean power at the same range bin of all other range profiles. As a result, FS-CDM signal processing works more effectively for strong targets. Further, the larger the range profile difference, the better the improvement achieved in the Doppler dynamic range by using FS-CDM signal processing.

### Doppler Profile Examples

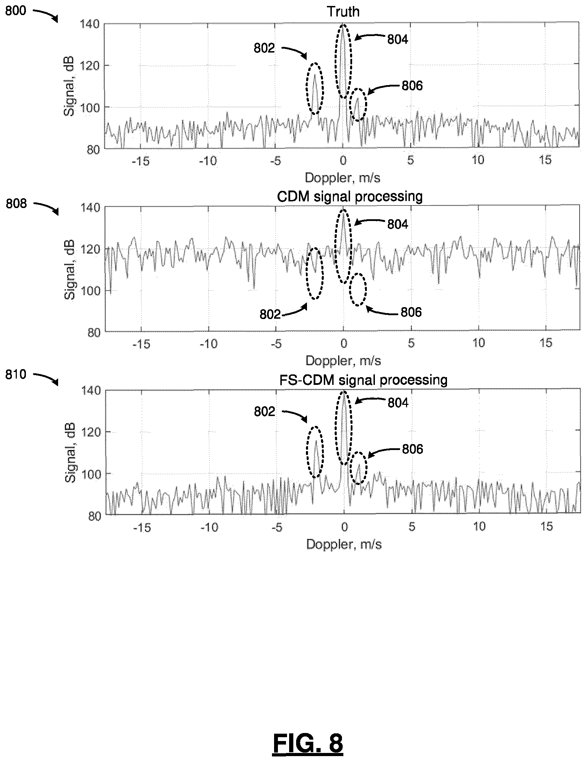

With reference to FIG. 8, graphs of Doppler profiles are shown based on simulation results using the signal processing techniques of the present disclosure. The Doppler profile graph at 800, referred to as "Truth", shows the actual Doppler profile of an environment with m/s shown on the horizontal axis and the signal in dB shown on the vertical axis. The actual Doppler profile of the environment includes three targets 802, 804, 806, with target 804 at 0 m/s, target 802 at -2 m/s, and target 806 at 1 m/s on the Doppler profile. As shown in FIG. 8, target 804 is the strongest target, with targets 802 and 806 being relatively weaker targets than 804, and with target 806 being the weakest target.

Doppler profile graph 808 illustrates the Doppler profile results of using CDM signal processing. As shown in Doppler profile graph 808, the relatively weaker signals of targets 802 and 806 are masked by noise in the Doppler profile results using CDM signal processing. As further shown in Doppler profile graph 808, the Doppler dynamic range of using CDM signal processing is approximately 15 dB for this environment.

Doppler profile graph 810 illustrates the Doppler profile results of using FS-CDM signal processing. As shown in Doppler profile graph 810, the relatively weaker signals of targets 802 and 806 are preserved in the Doppler profile results using FS-CDM signal processing. As further shown in Doppler profile graph 810, the Doppler dynamic range of using FS-CDM signal processing is greater than 40 dB for this environment, which is a significant increase in the Doppler dynamic range, as compared with the Doppler dynamic range resulting from using CDM processing without frequency shifting.

### Range Profile Examples

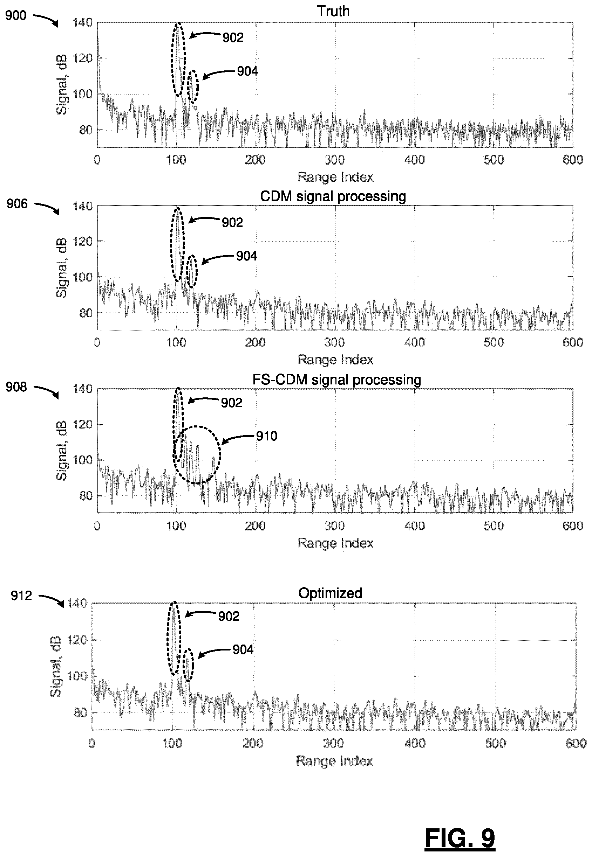

With reference to FIG. 9, graphs of range profiles are shown based on simulation results using the signal processing techniques of the present disclosure. The range profile graph at 900, referred to as "Truth", shows the actual range profile of an environment with the range index shown on the horizontal axis and the signal in dB shown on the vertical axis. The actual Doppler profile of the environment includes two targets 902, 904. As shown in FIG. 9, target 902 is a relatively stronger target and target 904 is a relatively weaker target.

Range profile graph 906 illustrates the range profile results of using CDM signal processing. As shown in range profile graph 906, the signals of both targets are preserved in the range profile results using CDM signal processing.

Range profile graph 908 illustrates the range profile results of using FS-CDM signal processing. As shown in range profile graph 908, the signal of targets 902 is preserved in the range profile results using FS-CDM signal processing. The FS-CDM signal processing, however, provides a range profile that includes a number of false targets 910 resulting from the frequency shifting of the FS-CDM signal processing.

Range profile graph 912 illustrates an optimized range profile that combines the results of the CDM and FS-CDM signal processing techniques. In particular, the false targets 910 from the range profile 908 resulting from the FS-CDM signal processing have been replaced with target 904 from the range profile 906 resulting from CDM signal processing. In this way, the false targets 910 in the range profile 908 are replaced with the results from the range profile 906 using CDM processing, to result in an optimized range profile 912 that correctly identifies targets 902 and 904. This optimization of selecting results from each profile is performed by the processor 200 at 634 and 636 of FIG. 6 to generate the optimized data cube 638 based on the FS-CDM data cube 626 and the legacy/CDM data cube 630.

In this way, since the frequency shift used by the FS-CDM signal processing is predetermined and known, the false targets in the range profile can be removed, as illustrated in FIG. 9.

### Computational Impact

Table 1 below lists the number of total multiplications required to perform the FFT processing for each of the CDM signal processing, CDM with REST signal processing, and the alternating FS-CDM and CDM signal processing of the present disclosure. The table assumes that there are $n_1$ TX antennas, $n_2$ RX antennas, m range bins, $\eta$ Doppler bins, and k REST range bins each performing $l$ rounds of REST processing. The size of the FFTs, e.g., for range and Doppler processing, can be different.

| TABLE 1 | |
|---|---|
| **Signal Processing Type** | **Number of Total Multiplications Required** |
| Legacy CDM | $n_1n_2\{n[0(m \cdot \log m)] + m[n + 0(n \cdot \log n)]\}$ |
| CDM + REST | $n_1n_2\{n[0(m \cdot \log m)] + m[n + 0(n \cdot \log n)]\} + n_1n_2kl\{n(n_1 - 1) + 2[0(n \cdot \log n)]\}$ |

(continued)

| TABLE 1 | |
|---|---|
| **Signal Processing Type** | **Number of Total Multiplications Required** |
| Alternating FS-CDM/Legacy CDM | $n_1 n_2 \{n[0(m \cdot \log m)] + m[n + 0(n \cdot \log n)]\}$ |

As shown in Table 1, a large MIMO and high range resolution radar system would have large $n_1$ (tens) and $k$ (hundreds) values, making CDM with REST much more computationally expensive than the alternating FS-CDM and CDM signal processing technique of the present disclosure. In this way, the alternating FS-CDM and CDM signal processing of the present disclosure provides a technique for reducing residue and noise and increasing the Doppler dynamic range of the MIMO radar system 100 while using less computational resources than other techniques, such as CDM with REST signal processing.

*Terminology*

The foregoing description of the embodiments has been provided for purposes of illustration and description and is not intended to be exhaustive or to limit the disclosure. Individual elements or features of a particular embodiment are generally not limited to that particular embodiment, but, where applicable, are interchangeable and can be used in another embodiment, even if not specifically shown or described. The various embodiments may also be varied in many ways. Such variations are not to be regarded as a departure from the disclosure, and all such modifications are intended to be included within the scope of the disclosure. Although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Example embodiments are provided so that this disclosure will be thorough and will fully convey the scope to those who are skilled in the art. Specific details are set forth, including examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

In the written description and claims, one or more steps within a method may be executed in a different order (or concurrently) without altering the principles of the present disclosure. Similarly, one or more instructions stored in a non-transitory computer-readable medium may be executed in different order (or concurrently) without altering the principles of the present disclosure. Unless indicated otherwise, numbering or other labeling of instructions or method steps is done for convenient reference and not to indicate a fixed order.

Spatial and functional relationships between elements (for example, between modules) are described using various terms, including "connected," "engaged," "interfaced," and "coupled." Unless explicitly described as being "direct," when a relationship between first and second elements is described in the above disclosure, that relationship encompasses a direct relationship where no other intervening elements are present between the first and second elements, and also an indirect relationship where one or more intervening elements are present (either spatially or functionally) between the first and second elements.

The phrase "at least one of A, B, and C" should be construed to mean a logical (A OR B OR C), using a non-exclusive logical OR, and should not be construed to mean "at least one of A, at least one of B, and at least one of C." The term "set" does not necessarily exclude the empty set. The term "non-empty set" may be used to indicate exclusion of the empty set. The term "subset" does not necessarily require a proper subset. In other words, a first subset of a first set may be coextensive with (equal to) the first set.

In the figures, the direction of an arrow, as indicated by the arrowhead, generally demonstrates the flow of information (such as data or instructions) that is of interest to the illustration. For example, when element A and element B exchange a variety of information, but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" or the term "controller" may be replaced with the term "circuit." The term "module" may refer to, be part of, or include processor hardware (shared, dedicated, or group) that executes code and memory hardware (shared, dedicated, or group) that stores code executed by the processor hardware.

In various implementations, the functionality of the module may be distributed among multiple modules that are connected via the communications system. For example, multiple modules may implement the same functionality distributed by a load balancing system. In a further example, the functionality of the module may be split between a server (also known as remote, or cloud) module and a client (or, user) module. For example, the client module may include a native or web application executing on a client device and in network communication with the server module.

The term code, as used above, may include software, firmware, and/or microcode, and may refer to programs, routines, functions, classes, data structures, and/or objects. Shared processor hardware encompasses a single microprocessor that executes some or all code from multiple modules. Group processor hardware encompasses a microprocessor that, in combination with additional microprocessors, executes some or all code from one or more modules. References to multiple microprocessors encompass multiple microprocessors on discrete dies, multiple microprocessors on a single die, multiple cores of a single microprocessor, multiple threads of a single microprocessor, or a combination of the above.

Shared memory hardware encompasses a single memory device that stores some or all code from multiple modules. Group memory hardware encompasses a memory device that, in combination with other memory devices, stores some or all code from one or more modules.

The term memory hardware is a subset of the term computer-readable medium. The term computer-readable medium, as used herein, does not encompass transitory electrical or electromagnetic signals propagating through a medium (such as on a carrier wave); the term computer-readable medium is therefore considered tangible and non-transitory. Non-limiting examples of a non-transitory computer-readable medium are nonvolatile memory devices (such as a flash memory device, an erasable programmable read-only memory device, or a mask read-only memory device), volatile memory devices (such as a static random access memory device or a dynamic random access memory device), magnetic storage media (such as an analog or digital magnetic tape or a hard disk drive), and optical storage media.

The apparatuses and methods described in this application may be partially or fully implemented by a special purpose computer created by configuring a general-purpose computer to execute one or more particular functions embodied in computer programs. Such apparatuses and methods may be described as computerized apparatuses and computerized methods. The functional blocks and flowchart elements described above serve as software specifications, which can be translated into computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective C, Swift, Haskell, Go, SQL, R, Lisp, Java®, Fortran, Perl, Pascal, Curl, OCaml, JavaScript®, HTML5 (Hypertext Markup Language 5th revision), Ada, ASP (Active Server Pages), PHP (PHP: Hypertext Preprocessor), Scala, Eiffel, Smalltalk, Erlang, Ruby, Flash®, Visual Basic®, Lua, MATLAB, SIMULINK, and Python®.

## Claims

1. A radar system comprising at least one processor and memory configured to:

transmit radar signals within a plurality of frames, each frame having a plurality of radar chips, and each radar chirp having radar signals transmitted by a plurality of transmit channels ($TX_1$ to $TX_m$) using a modulation technique and a frequency shift amount such that a frequency of the radar signals transmitted by each transmit channel is shifted by the frequency shift amount from each adjacent transmit channel;

receive the transmitted radar signals within the plurality of frames after the transmitted radar signals are reflected from at least one target;

process the received radar signals using a first signal processing mode for at least one frame of the plurality of frames and a second signal processing mode for at least one frame of the plurality of frames, the first signal processing mode and the second signal processing mode each including performing range fast Fourier transform (FFT) processing, the first signal processing mode including performing virtual channel demodulation by matching all received radar signals within each radar chirp to $TX_1$ and performing Doppler FFT and range shifting, and the second signal processing mode including performing virtual channel demodulation by matching the received radar signals within each radar chirp to a corresponding one of the plurality of transmit channels ($TX_1$

to $TX_m$) and performing Doppler FFT without range shifting;
generate a first data cube based on radar signals processed using the first signal processing mode and a second data cube based on radar signals processed using the second signal processing mode;
generate an optimized data cube based on the first data cube and the second data cube and based on a strength of the at least one target represented in the first data cube and the second data cube; and
determine at least one of a velocity estimate, a range estimate, or an angle estimate of the at least one target based on the optimized data cube.

2. The radar system of claim 1, wherein the at least one processor and memory are further configured to process the received radar signals using the first signal processing mode and the second signal processing mode by repeatedly using an alternating processing pattern that includes processing at least one first frame of the plurality of frames using the first signal processing mode followed by processing at least one subsequent frame of the plurality of frames using the second signal processing mode.

3. The radar system of claim 1 or 2, wherein the at least one processor and memory are further configured to determine the strength of the at least one target based on a power of received radar signals associated with the at least one target and based on a mean power of the radar signals transmitted by the plurality of transmit channels.

4. The radar system of claim 3, wherein the at least one processor and memory are further configured to use data values from the first and/or of the second data cube in response to the strength of the at least one target being such that the power of the received signals associated with the at least one target is greater than the mean power.

5. The radar system of claim 3 or 4, wherein the at least one processor and memory are further configured to use data values from the first data cube in response to the strength of the at least one target being such that the power of the received signals is less than a predetermined threshold.

6. The radar system of claim 1, wherein the modulation technique includes code-division multiplexing (CDM),

   Doppler-division multiplexing (DDM), or
   a hybrid of both code-divisional multiplexing (CDM) and Doppler-division multiplexing (DDM).

7. The radar system of claim 1, wherein the radar system is installed in a vehicle having at least one vehicle system, the at least one processor and memory are configured to communicate at least one of the velocity estimate, the range estimate or the angle estimate to the at least one vehicle system, and the at least one vehicle system is configured to control at least one of a steering system, a braking system, a throttle system, or a driver alert and warning system based on the estimate of the range and the velocity of the target.

8. A method comprising:

   transmitting, with a plurality of transmit channels ($TX_1$ to $TX_m$) of a radar system, radar signals within a plurality of frames, each frame having a plurality of radar chips having radar signals transmitted by the plurality of transmit channels ($TX_1$ to $TX_m$) using a modulation technique and a frequency shift amount such that a frequency of the radar signals transmitted by each transmit channel is shifted by the frequency shift amount from each adjacent transmit channel;
   receiving, with at least one receive channel of the radar system, the transmitted radar signals within the plurality of frames after the transmitted radar signals are reflected from at least one target;
   processing, with at least one processor of the radar system, the received radar signals using a first signal processing mode for at least one frame of the plurality of frames and a second signal processing mode for at least one frame of the plurality of frames, the first signal processing mode and the second signal processing mode each including performing range fast Fourier transform (FFT) processing, the first signal processing mode including performing virtual channel demodulation by matching all received radar signals within each radar chirp to $TX_1$ and performing Doppler FFT and range shifting, and the second signal processing mode including performing virtual channel demodulation by matching the received radar signals with each radar chirp to a corresponding one of the plurality of transmit channels ($TX_1$ to $TX_m$) and performing Doppler FFT without range shifting;
   generating, with the at least one processor, a first data cube based on radar signals processed using the first signal processing mode and a second data cube based on radar signals processed using the second signal processing mode;
   generating, with the at least one processor, an optimized data cube based on the first data cube and the second data cube and based on a strength of the at least one target represented in the first data cube and the second data cube; and

determining, with the at least one processor, at least one of a velocity estimate, a range estimate, or an angle estimate of the at least one target based on the optimized data cube.

9. The method of claim 8, wherein processing the received radar signals using the first signal processing mode and the second signal processing mode includes repeatedly using an alternating processing pattern that includes processing at least one first frame of the plurality of frames using the first signal processing mode followed by processing at least one subsequent frame of the plurality of frames using the second signal processing mode.

10. The method of claim 8 or 9, further comprising determining, with the at least one processor, the strength of the at least one target based on a power of received radar signals associated with the at least one target and based on a mean power of the radar signals transmitted by the plurality of transmit channels.

11. The method of claim 10, wherein generating the optimized data cube includes using data values from the first data cube in response to the strength of the at least one target being such that the power of the received signals associated with the at least one target is greater than the mean power.

12. The method of claim 10 or 11, wherein generating the optimized data cube includes using data values from the second data cube in response to the strength of the at least one target being such that the power of the received signals associated with the at least one target is less than the mean power.

13. The method of any one of claims 8 to 12, wherein generating the optimized data cube includes using data values from the first data cube in response to the strength of the at least one target being such that the power of the received signals is less than a predetermined threshold.

14. The method of any one of claims 8 to 13, wherein the modulation technique includes code-division multiplexing (CDM),

Doppler-division multiplexing (DDM), or
a hybrid of both code-divisional multiplexing (CDM) and Doppler-division multiplexing (DDM).

15. The method of any one of claims 8 to 14, wherein the radar system is installed in a vehicle having at least one vehicle system, the at least one processor and memory are configured to communicate at least one of the velocity estimate, the range estimate or the angle estimate to the at least one vehicle system, and the at least one vehicle system is configured to control at least one of a steering system, a braking system, a throttle system, or a driver alert and warning system based on the estimate of the range and the velocity of the target.

**FIG. 1**

Vehicle
102

MIMO Radar System
100

Transmitter
204

Receiver
206

Processor
200

Analog-to-Digital
Converter
205

Antenna Array
207

Memory
202

Transmit/Receive
208

Range FFT
210

Doppler FFT
212

Doppler FFT and
Range Shifting
214

Data Cube Generation
216

Range Estimation
218

Velocity Estimation
220

Angle Estimation
222

Vehicle Systems
224

FIG. 2

**FIG. 3**

**FIG. 4**

EP 4 685 515 A1

Range profiles are different for different TX channels using FS-CDM signal processing mode.

Equation 2:
$$\tilde{r}_{k,m^*,n} = a_{m^*,n}e^{j\psi_k}e^{j\phi_{m^*}}e^{j2\pi f_d n} + e^{j\psi_k}\sum_{\substack{m=1\\m\neq m^*}}^{M} c_{m^*,n} * c_{m,n}a_{m,n}e^{\phi_m}e^{j2\pi f_d n}$$

502

a1 a2 a3 a4 — range profile TX1

a1 a2 a3 a4 — range profile TX2

a1 a2 a3 a4 — range profile TX3

a1 a2 a3 a4 — range profile TX4

Range profiles using CDM signal processing mode

504

a1 a2 a3 a4 — range profile TX1

a1 a2 a3 a4 — range profile TX2

a1 a2 a3 a4 — range profile TX3

a1 a2 a3 a4 — range profile TX4

Range profiles using FS-CDM signal processing mode

**FIG. 5**

EP 4 685 515 A1

FIG. 6

EP 4 685 515 A1

**FIG. 7**

EP 4 685 515 A1

**FIG. 8**

**FIG. 9**

Europäisches
Patentamt
European
Patent Office
Office européen
des brevets

## EUROPEAN SEARCH REPORT

**Application Number**

EP 24 21 0531

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 043 918 A1 (APTIV TECH LTD [BB]) 17 August 2022 (2022-08-17) * paragraphs [0016] - [0018], [0025] - [0034]; figures 2-4,6 * | 1-15 | INV. G01S7/35 G01S13/34 G01S13/58 G01S13/931 |
| A | JP 2022 521823 A (TEXAS INSTRUMENTS INC.) 12 April 2022 (2022-04-12) * paragraphs [0012] - [0023], [0026], [0045] - [0051], [0065] - [0079]; figure 3 * | 1-15 | |
| A | SUN SHUNQIAO ET AL: "MIMO Radar for Advanced Driver-Assistance Systems and Autonomous Driving: Advantages and Challenges", IEEE SIGNAL PROCESSING MAGAZINE, IEEE, USA, vol. 37, no. 4, 29 June 2020 (2020-06-29), pages 98-117, XP011796877, ISSN: 1053-5888, DOI: 10.1109/MSP.2020.2978507 [retrieved on 2020-06-27] * page 102 - page 107; figures 4-7,9 * | 1-15 | TECHNICAL FIELDS SEARCHED (IPC) G01S |

The present search report has been drawn up for all claims

| Place of search | Date of completion of the search | Examiner |
|---|---|---|
| Munich | 1 April 2025 | Fernández Cuenca, B |

EPO FORM 1503 03.82 (P04C01)

## ANNEX TO THE EUROPEAN SEARCH REPORT
## ON EUROPEAN PATENT APPLICATION NO.

EP 24 21 0531

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2025

| Patent document cited in search report | | Publication date | Patent family member(s) | | Publication date |
|---|---|---|---|---|---|
| EP 4043918 | A1 | 17-08-2022 | CN | 114924250 A | 19-08-2022 |
| | | | EP | 4043918 A1 | 17-08-2022 |
| | | | US | 2022260699 A1 | 18-08-2022 |
| JP 2022521823 | A | 12-04-2022 | CN | 113631946 A | 09-11-2021 |
| | | | EP | 3948339 A1 | 09-02-2022 |
| | | | JP | 7598330 B2 | 11-12-2024 |
| | | | JP | 2022521823 A | 12-04-2022 |
| | | | US | 2020309939 A1 | 01-10-2020 |
| | | | WO | 2020198290 A1 | 01-10-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9952319 B